# EUROPÄISCHE PATENTANMELDUNG

(11) **EP 0 948 884 A2**
(43) Veröffentlichungstag der Anmeldung: **13.10.1999**
(21) Anmeldenummer: 99106306.6
(22) Anmeldetag: 30.03.1999
(51) Int. Cl.: A01F 12/30

(54) **Abscheideelement, Abscheidevorrichtung und Erntemaschine**

(30) Priorität: 08.04.1998 DE 19815730
(71) Anmelder: Deere & Company, Moline, Illinois 61265-8098 (US)
(72) Erfinder: Lauer, Fritz, 66894 Krähenberg (DE)
(74) Vertreter: Magin, Ludwig Bernhard

(57) **Zusammenfassung**

Bisher bekannte Abscheidevorrichtungen erbringen nicht unter allen Einsatzbedingungen eine optimale Abscheidung. Vielmehr setzen sich entweder Abscheidebeläge zu oder eine Gutmatte, aus der Gutteile abgeschieden werden sollen, wird nicht ausreichend aufgelockert.

Es wird ein Abscheideelement (62) vorgeschlagen, das aus vertikalen Stegen (64) und diese verbindenden Verbindungsspangen (66) gebildet ist und das als eine Einheit auf Abscheidebeläge (46) einer Abscheidevorrichtung (30) aufgesetzt wird. Auf diese Weise wird die Gutmatte im Abstand zu dem Abscheidebelag (46) geführt, was den Austritt und die Trennung von Gutteilen unterstützt.

Derartige Abscheideelemente (62) werden z. B. auf Strohschüttlern von Mähdreschern verwendet.

## Beschreibung

Die Erfindung betrifft ein Abscheideelement zum Aufbau auf einen Abscheidebelag einer oszillierenden Abscheidevorrichtung, eine solchermaßen bestückte Abscheidevorrichtung und eine Erntemaschine mit einer derartigen Abscheidevorrichtung.

Die DE-B-1 957 843 offenbart einen Strohschüttler für Dreschmaschinen und Mähdrescher, der aus einem rechteckförmigen Rahmen und mehreren Schüttelhorden besteht, die auf den Rahmen aufgeschoben oder aufgesetzt werden. Die Schüttelhorden weisen auf ihrer oben liegenden Förderfläche einen perforierten Belag auf, der zwischen zwei senkrechten und in Zacken auslaufenden Wänden gehalten wird. Die Ausbildung dieser Schüttelhorden ist so getroffen, daß deren Forderfläche in der stromabwärts weisenden Richtung ansteigt.

Aus der DE-B-1 161 073 geht ein Mähdrescher mit Strohschüttlern hervor, auf denen Schüttlerhorden mit einer vertikalen Schwenkbarkeit aufgesetzt sind. Auf diese Weise kann die Förderfläche in verschiedene Steigungen gebracht und somit das Abscheideverhalten verändert werden.

Gemäß der DE-A1-29 43 042 wird ein Stufenschüttler eines Mähdreschers zum Ernten von Maiskolben mit sogenannten Reitern versehen, die als freitragende Zackenbleche über eine stromabwärts folgende Schüttlerstufe ragen. Die von den Reitern überlagerte Schüttlerstufe ist offen, damit die Spindeln und Spindelteile hindurchtreten und auf einen Vorbereitungsboden fallen können, während die nicht überlagerten Schüttlerstufen mit Abscheidebelägen versehen sind. Diese Reiter und offene Schüttlerstufe werden nur für die Mais-Spindel-Ernte verwendet; bei der Getreideernte werden die Reiter entfernt und die Schüttlerstufe geschlossen.

Schließlich zeigt der Prospekt "D 7000 HYDROSTATIC von Dronningborg, Druckvermerk DM1059 GB 1079 3.000" einen Mähdrescher mit Strohschüttlern, auf deren Länge mehrere unterschiedlich steil ansteigende Schüttlerhorden mit Förderbelägen vorgesehen sind. Mittig und sich in der Förderrichtung erstreckend sind auf die Förderbeläge Zackenbleche aufgesetzt, die eine zusätzliche Auflockerung des Gutes bewirken sollen.

Das der Erfindung zugrunde liegende Problem wird darin gesehen, daß die bekannten Lösungen noch nicht zu einer optimalen Abscheidung bei Getreide führen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln, bzw. eine vorteilhafte Verwendung unter Schutz stellen.

Auf diese Weise ist ein Abscheideelement geschaffen, das einfach aufgebaut ist und somit günstig gefertigt werden kann und das eine Gutmatte trägt und dabei auflockert, so daß daraus abzuscheidendes klein volumiges Material wie Getreide und Spreu entfallen kann, anstatt diese Gutmatte nur im Bereich eines einzigen Zackenblechs anzuheben, ohne dabei den Austritt z. B. von Körnern zu ermöglichen. Während im weiteren Verlauf die Gutmatte, z. B. Stroh, auf dem Abscheideelement getragen wird, erfolgt auf dem Abscheidebelag eine weitere Trennung der Körner von der Spreu. Die Montage und Demontage des Abscheideelements ist einfach, da die mehreren Stege untereinander zu einer Einheit verbunden sind.

Die endseitige Verwendung zweier Verbindungsspangen erbringt eine höhere Festigkeit des Abscheideelements und steht auch einer Abscheidung weniger im Weg als mehrere z. B. in der Mitte des Abscheideelements vorgesehene Verbindungsspangen. Die Befestigung des Abscheideelements mittels Schrauben und das Vorsehen entsprechender Öffnungen in ihm stellt eine benutzerfreundliche Handhabung sicher.

Wenn die Verbindungsspangen, wie auch die Stege, gleich ausgebildet sind, sind hohe Fertigungszahlen erreichbar, die die Stückkosten reduzieren. Werden die Verbindungsspangen oben und unten montiert, erfahren die Stege eine erhöhte Festigkeit.

Die Verbindungsspangen selbst werden fest, wenn sie in der Art eines Winkelprofils gebildet sind, und eine Vergrößerung der Verbindungsfläche zwischen den Stegen und den Verbindungsspangen vermeidet Materialermüdungen im Verbindungsbereich. Dadurch, daß der zweite Schenkel nur im Verbindungsbereich größer ausgebildet ist, bleibt im übrigen Bereich ausreichend Raum, um den Materialstrom passieren zu lassen.

Eine zackenartige Ausbildung der Stege in ihrem regelmäßig oben liegenden Förderbereich sorgt für eine gute Fördereigenschaft des Abscheideelements und bewirkt, daß die Gutmatte auch in einer zweiten Richtung auseinander gezogen wird.

Da das Abscheideverhalten der Abscheideelemente wesentlich von der Art und dem Zustand des Gutes und dem Ausmaß der Einwirkung auf dieses abhängt, bieten Stege mit ansteigend oder abfallend verlaufenden Kanten die Möglichkeit, das Abscheideverhalten an die jeweiligen Bedingungen anzupassen.

Eine mit den erfindungsgemäßen Abscheideelementen bestückte Abscheidevorrichtung ist besonders effektiv, da die Abscheideelemente die Gutmatte von den Abscheidebelägen fernhalten, so daß sich deren Öffnungen nicht zusetzen und die Gutmatte so schütteln, daß z. B. Körner und Ährenhestandteile nach unten aus der Gutmatte austreten und von den Abscheidebelägen zusätzlich getrennt werden.

Insbesondere für eine nachträgliche Montage und Demontage ist es von großem Nutzen, wenn das oder die Abscheideelemente genauso wie die bereits vorhandenen Abscheidebeläge aufgesetzt und befestigt werden können. Somit bedarf es keiner zusätzlichen Maßnahmen, wie Einschweißen, Löcher bohren, oder dergleichen. Vielmehr werden lediglich die Befestigungsmittel - normalerweise Schrauben - des betreffenden Abscheidebelags gelöst, das Abscheideelement aufgesetzt und mit den bereits vorhandenen Schrauben beide Elemente befestigt. Aufgrund dieser Lösung kann ein Abscheideelement an jeder Stelle der Abscheidevorrichtung aufgesetzt werden, an der bereits ein Abscheidebelag vorhanden ist.

Angesichts der hohen Abscheidekapazität, die in heutigen Mähdreschern oder anderen Erntemaschinen - im Gegensatz zu stationären Dreschanlagen - gefordert wird, ist es zur Leistungssteigerung von großem Vorteil, wenn diese mit den erfindungsgemäßen Abscheideelementen auf den Strohschüttlern und/oder dem Vorbereitungsboden und/oder den Sieben bestückt werden.

In der Zeichnung ist ein nachfolgend näher beschriebenes Ausführungsbeispiel der Erfindung dargestellt. Es zeigt:
- Fig. 1: eine Erntemaschine mit einer mit erfindungsgemäßen Abscheidelementen bestückten Abscheidevorrichtung,
- Fig. 2: einen Bereich der Abscheidevorrichtung mit einem erfindungsgemäßen Abscheideelement in vergrößerter Darstellung und in Seitenansicht und
- Fig. 3: ein Abscheideelement in perspektivischer Darstellung.

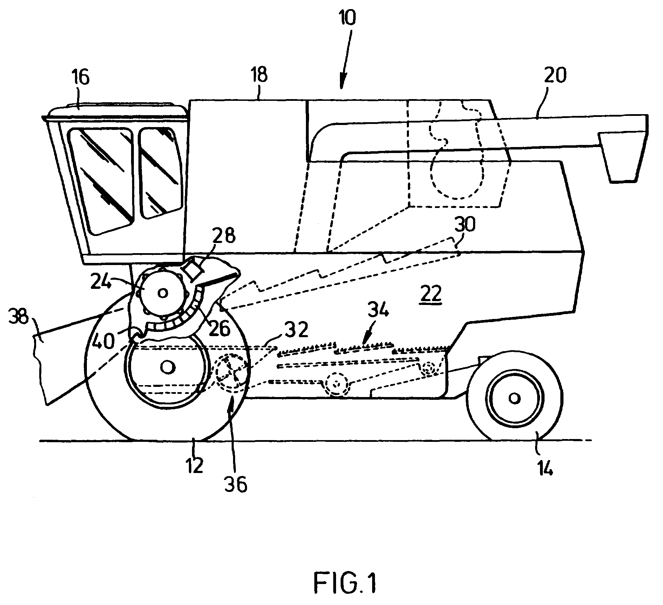

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. Anstatt eines Mähdreschers könnte ebenso eine stationäre Dreschmaschine, eine Versuchs-Dreschanlage oder dergleichen in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Abscheidevorrichtungen 30 in der Form von Schüttlern, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Abscheidevorrichtungen 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

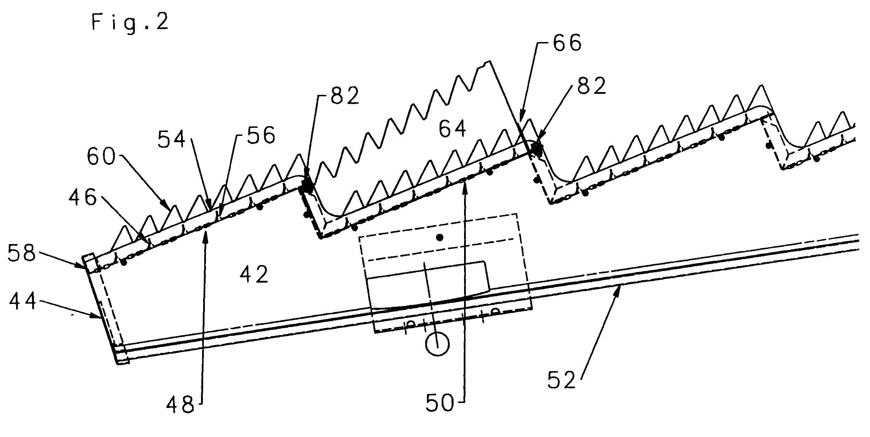

Figur 2 zeigt einen vorderen oder stromaufwärts gelegenen Endabschnitt der Abscheidevorrichtung 30 mit Seitenwänden 42, einer Vorderwand 44, Abscheidebelägen 46 und einer ersten und einer zweiten Stufe 48 und 50. Eine nicht näher bezeichnete dritte Stufe ist nur angedeutet.

Die Abscheidevorrichtung 30 ist als eine nach oben grundsätzlich offene Wanne ausgebildet, die seitlich von den Seitenwänden 42, vorne von der Vorderwand 44 und unten gegebenenfalls von einem Boden 52 umschlossen wird. In dem dargestellten Ausführungsbeispiel sind die Seitenwände 42, von denen nur die in Vorwärtsfahrtrichtung der Erntemaschine 10 links gelegene gezeigt ist, in ihrem oberen Bereich mit einer sägezahnartig ansteigenden und abfallenden Kante 54 versehen. Die Seitenwände 42, die Vorderwand 44 und der Boden 52 sind herkömmlicherweise aus Stahlblech als eine Einheit gebildet, die entweder aus einem Blech gebogen oder zusammengeschweißt ist. Die Abscheidevorrichtung 30 ist auf nicht gezeigten Kurbelwellen gelagert und wird von diesen oszillierend, d. h. auf und ab, sowie vor- und zurückbewegt.

Die Vorderwand 44 verbindet die Seitenwände 42 und den Boden 52 und bildet aus diesen einen verwindungssteifen Zusammenbau.

Der Abscheidebelag 46 ist mit einer Vielzahl von Öffnungen 56 versehen, die durch aufgebogene Blechlaschen oder Ausstanzungen gebildet werden und dem Durchtritt von abgeschiedenem Gut, z. B. Körnern, Ähren oder Ährenbestandteilen dienen. Der Abscheidebelag 46 verläuft parallel zu der Kante 54 und ist auf Stegen 58 gelagert, nämlich vorzugsweise aufgeschraubt, die selbst vorzugsweise starr mit den Seitenwänden 42 verbunden sind. Da es eine Vielzahl von Abscheidebelägen 46 mit unterschiedlichen Öffnungen 56 für verschiedene Güter gibt, ist es auf diese Weise möglich, die Abscheidevorrichtung 30 für die Abscheidung unterschiedlicher Güter zu rüsten.

Während das abgeschiedene Gut auf den Abscheidebelägen 46 aufgelockert und weiter getrennt wird, liegt die Gutmatte, aus der das abgeschiedene Gut stammt, seitlich auf Zacken 60 auf, in denen die Seitenwände 42 mit ihrer Kante 54 auslaufen. Aufgrund der Ausrichtung der Zacken 60 wird die Gutmatte sicher stromabwärts mitgenommen, d. h. in der Zeichnung von links nach rechts. Die bisherige Beschreibung trifft auch im wesentlichen auf bekannte Abscheidevorrichtungen 30 zu.

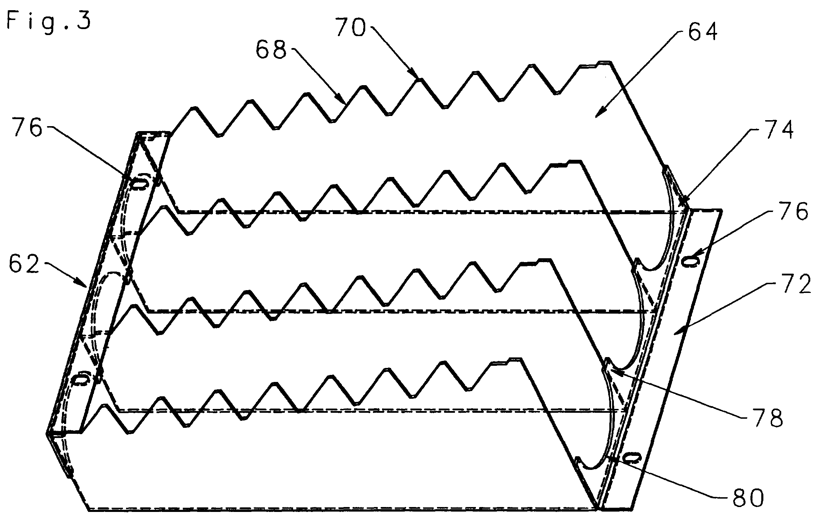

Figur 3 zeigt ein erfindungsgemäßes Abscheideelement 62 an sich, das nach der dortigen Darstellung Stege 64 und Verbindungsspangen 66 aufweist.

Das Abscheideelement 62 ist als eine Schweißeinheit ausgebildet und kann mit - erforderlichenfalls aber auch ohne - einen Abscheidebelag 46 auf die Stege 58 aufgesetzt werden. Insbesondere der Bereich der Abscheidevorrichtung 30 ab und einschließlich der zweiten Stufe 50 eignet sich hierfür.

Die Stege 64, von denen in dem Ausführungsbeispiel vier längs zueinander verlaufend vorgesehen sind, sind identisch, was zwar aus fertigungstechnischen Gründen vorteilhaft, aber keinesfalls zwingend ist. Je nach der Breite der Abscheidevorrichtung 30 bzw. von deren Abscheidebelag 46 können auch mehr oder weniger Stege 64 vorgesehen werden. Die Stege 64 weisen in der Seitenansicht im wesentlichen eine ungleichmäßige Trapezform auf, die mit Blick auf die Zeichnung von links nach rechts zu einer Zunahme der Höhe des Stegs 64 führt. Während die Stege 64 vorne, unten und hinten jeweils in einer geraden Kante enden, verläuft eine obere Kante 68 sägezahnartig. Die Lage und Form dadurch entstehender Zacken 70 ist so gewählt, daß dessen ansteigende Flanke stromaufwärts liegt und dessen stark abfallende, fast vertikale Kante stromabwärts auf diese folgt.

Die Verbindungsspangen 66 sind als Winkelprofil ausgebildet und enthalten einen ersten Schenkel 72 und einen zweiten Schenkel 74.

Der erste Schenkel 72 verläuft im wesentlichen horizontal bzw. in der Förderrichtung und enthält eine oder mehrere Befestigungsmittel 76 in der Form von Öffnungen, die der Aufnahme in Figur 2 gezeigter Befestigungsmittel 82 in der Form von Schrauben, dienen, mit denen das Abscheideelement 62 auf den Stegen 58 aufgeschraubt wird. Es sind jedoch auch andere Befestigungsmittel 76, 82 denkbar, z. B. Laschen, Haken, Federclips, Rastnase, Spangen, etc.

Der zweite Schenkel 74 verläuft im wesentlichen rechtwinklig zu dem ersten Schenkel 72 und weist Bereiche großer Höhe 78 und Bereiche kleiner Höhe 80 auf. Die Bereiche großer Höhe 78 befinden sich im Bereich der Verbindung mit einem Steg 64 und die Bereiche kleiner Höhe 80 befinden sich zwischen den Anschlußstellen der Stege 64. Aus Fertigungs- und Festigkeitsgründen verläuft der Übergang zwischen den Bereichen 78 und 80 in einer gleichmäßigen Kurve.

Aus Figur 3 wird ersichtlich, daß die stromaufwärts gelegene Verbindungsspange 66 mit ihrem ersten Schenkel 72 im vorderen Bereich der Stege 64 auf deren Kante 68 oben aufliegend befestigt ist, während sich der zweite Schenkel 74 nach unten erstreckt. Hingegen ist die stromabwärts gelegene Verbindungsspange 66 mit ihrem zweiten Schenkel 74 an die Endkante der Stege 64 in deren unteren Bereich angeschlossen, während sich der erste Schenkel 72 von den Stegen 64 stromabwärts erstreckt.

Die Verbindung der Stege 64 und der Verbindungsspangen 66 erfolgt vorzugsweise durch Schweißen. Die Stege 64 verlaufen im montierten Zustand zueinander parallel, wenn auch eine z. B. divergierende Anordnung möglich erscheint. Es ist aus Figur 3 ersichtlich, daß der Schweißzusammenbau des Abscheideelements 62 eine in sich steife Bauweise erbringt.

Figur 2 zeigt, welche Lage das Abscheideelement 62 im aufgebauten Zustand einnimmt und wie seine Befestigung konkret erfolgt. Entsprechend der Zeichnung ist ein Abscheideelement 62 vertikal deckungsgleich mit dem Abscheidebelag 46 im Bereich der zweiten Stufe 50 angebracht. Zur Befestigung beider werden die Befestigungsmittel 82 (Schrauben) verwendet, die durch die Befestigungsmittel 76 (Öffnungen) und nicht gezeigte Öffnungen in den Stegen 58 und den Abscheidebelägen 46 gesteckt werden. Es ist klar erkennbar, daß in der eingebauten Weise die Kante 68 mehr oder weniger eine Fortsetzung der Kante 54 darstellt, wenn sie auch geringfügig steiler verläuft als die Kante 54.

Nach alledem ist ersichtlich, daß im Bereich des Abscheideelements 62 die Gutmatte nur auf den Stegen 64, d. h. auf deren Kante 68 aufliegt und das aus dieser abgeschiedene Gut durch den Freiraum zwischen den Stegen 64 auf den Abscheidebelag 46 fallen kann, wo es nochmals getrennt wird. Es ist weiter erkennbar, daß das Abscheideelement 62 in einfachster Weise auf- und abgebaut werden kann, ohne daß die Abscheidevorrichtung 30 dadurch beeinträchtigt wird.

## Patentansprüche

1. Abscheideelement (62) zum Aufbau auf einen Abscheidebelag (46) einer oszillierenden Abscheidevorrichtung (30), mit mehreren parallel oder im wesentlichen parallel zueinander verlaufenden und an einer zu förderndem Gut ausgesetzten Kante (68) mit einem Profil versehenen aufrechten Stegen (64), die mittels wenigstens einer Verbindungsspange (66) untereinander verbunden sind und Befestigungsmittel (76) zur lösbaren Verbindung mit der Abscheidevorrichtung (30) aufweist.

2. Abscheideelement nach Anspruch 1, dadurch gekennzeichnet, daß die Stege (64) an jedem mit Blick auf die Förderrichtung vorhandenen Endbereich mit einer Verbindungsspange (66) versehen sind, die wenigstens ein Befestigungsmittel (76) aufweist.

3. Abscheideelement nach Anspruch 1 oder 2, dadurch gekennzeichnet, daß mehrere Verbindungsspangen (66) gleich ausgebildet sind und einenends der Stege (64) an deren Oberseite und anderenends an deren Unterseite befestigt sind.

4. Abscheideelement nach einem oder mehreren der vorherigen Ansprüche, dadurch gekennzeichnet, daß die Verbindungsspange (66) einen ersten und einen zweiten Schenkel (72, 74) aufweist, die unter einem insbesondere rechten Winkel zueinander verlaufen, von denen der erste Schenkel (72) zur Verbindung mit der Abscheidevorrichtung (30) und der zweite Schenkel (74) zur Verbindung mit den Stegen (64) bestimmt ist, wobei der zweite Schenkel (74) im Bereich der Verbindung mit den Stegen (64) vergrößert ist.

5. Abscheideelement nach einem oder mehreren der vorherigen Ansprüche, dadurch gekennzeichnet, daß die Stege (64) im Bereich ihrer fördernden Kante (68) zackenartig ausgebildet sind.

6. Abscheideelement nach einem oder mehreren der vorherigen Ansprüche, dadurch gekennzeichnet, daß die Höhe der Stege (64) von dem stromaufwärts gelegenen zu dem stromabwärts gelegenen Ende hin zu- oder abnimmt.

7. Abscheidevorrichtung mit einer Abscheidebeläge (46) aufweisenden Forderfläche, dadurch gekennzeichnet, daß wenigstens ein Abscheideelement (62) nach einem oder mehreren der Ansprüche 1 bis 6 auf die Förderfläche aufgesetzt ist.

8. Abscheidevorrichtung nach Anspruch 7, dadurch gekennzeichnet, daß das Abscheideelement (62) deckungsgleich mit dem Abscheidebelag (46) auf die Abscheidevorrichtung (30) aufgesetzt und mit denselben Befestigungsmitteln (76, 82) festgelegt ist.

9. Erntemaschine, insbesondere Mähdrescher, gekennzeichnet durch die Verwendung eines Abscheideelements (62) nach einem oder mehreren der Ansprüche 1 bis 6 auf einem Strohschüttler, einem Vorbereitungsboden (32) oder einem Sieb (34).
